# EUROPÄISCHE PATENTSCHRIFT

(11) **EP 3 281 513 B1**
(45) Veröffentlichungstag und Bekanntmachung des Hinweises auf die Patenterteilung: **18.03.2020**
(21) Anmeldenummer: 17184820.3
(22) Anmeldetag: 03.08.2017
(51) Int. Cl.: A01D 78/10

(54) **HEUWERBUNGSMASCHINE, INSBESONDERE KREISELSCHWADER**
HAYMAKING MACHINE, IN PARTICULAR ROTARY SWATHER
MACHINE DE FENAISON, EN PARTICULIER ANDAINEUSE ROTATIVE

(30) Priorität: 09.08.2016 DE 102016114767
(43) Veröffentlichungstag der Anmeldung: 14.02.2018
(73) Patentinhaber: CLAAS Saulgau GmbH, 88348 Bad Saulgau (DE)
(72) Erfinder: Frick, Clemens, 88356 Ostrach (DE)

(56) Entgegenhaltungen:
- EP-A1- 2 499 897
- EP-A2- 2 145 529
- DE-U1- 20 011 449
- DE-U1-202007 001 281
- DE-U1-202010 006 406

## Beschreibung

Die Erfindung betrifft eine Heuwerbungsmaschine, insbesondere einen Kreiselschwader, nach dem Oberbegriff des Anspruchs 1.

Aus der Praxis sind Heuwerbungsmaschinen hinlänglich bekannt. So sind als Schwader sowie als Wender ausgebildete Heuwerbungsmaschinen bekannt. Bei der erfindungsgemäßen Heuwerbungsmaschine handelt es sich insbesondere um einen Kreiselschwader, besonders bevorzugt um einen Seitenkreiselschwader.

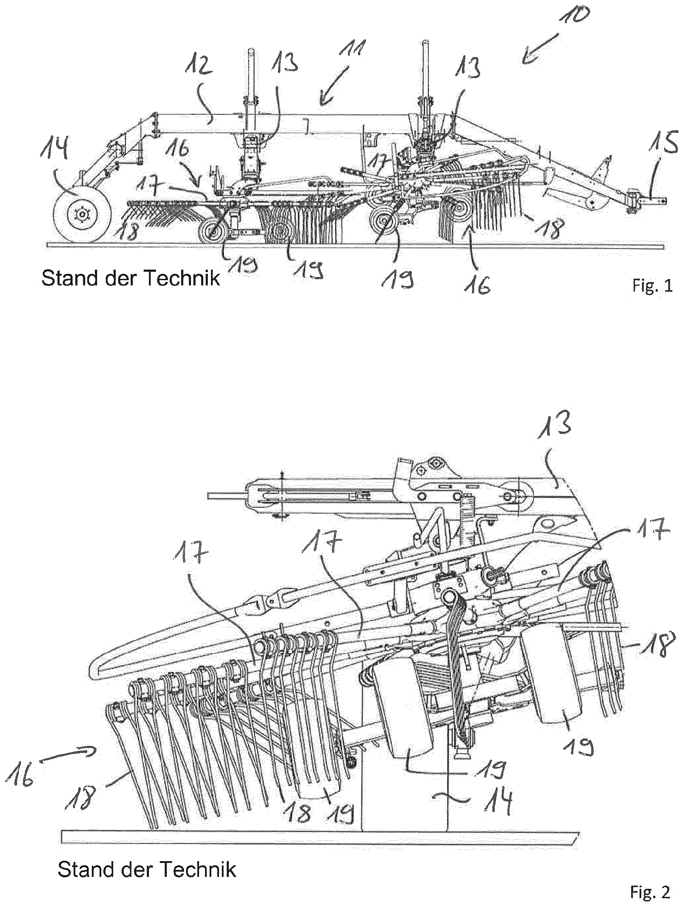

Fig. 1 und 2 zeigen den bekannten Aufbau einer als Seitenkreiselschwader ausgebildeten Heuwerbungsmaschine 10. Die Heuwerbungsmaschine 10 verfügt über ein Grundgestell 11 aus einem Längsholm 12 sowie Auslegerarmen 13. Die Heuwerbungsmaschine 10 ist über Stützräder 14, die am Grundgestell 11 angreifen, auf einem zu bearbeitenden Untergrund abstützbar, wobei die Heuwerbungsmaschine 10 über eine Zugdeichsel 15 an ein Zugfahrzeug ankoppelbar ist. Die als Seitenkreiselschwader ausgebildete Heuwerbungsmaschine 10 der Fig. 1 und 2 verfügt über Rechkreisel 16. Jeder Rechkreisel 16 ist an einem Auslegerarm 13 der Heuwerbungsmaschine 10 gelagert. Jeder Rechkreisel 16 ist um eine Kreiselachse umlaufend antreibbar und verfügt über Zinkenarme 17 mit Rechzinken 18. Die in Fig. 1 und 2 gezeigte Heuwerbungsmaschine 10 verfügt über zwei Rechkreisel 16, wobei ein erster Rechkreisel an einer ersten Seite des Längsholms 12 und ein zweiter Rechkreisel 16 an einer zweiten, gegenüberliegenden Seite des Längsholms 12 positioniert ist. In Fig. 1 ist der hintere Rechkreisel 16 in Arbeitsstellung gezeigt, wohingegen der vordere Rechkreisel 16 aus einer Arbeitsstellung herausgehoben ist. In der Arbeitsstellung ist der jeweilige Rechkreisel 16 über Tast- und Stützräder 19 auf dem zu bearbeitenden Untergrund abstützbar. Dann, wenn der jeweilige Rechkreisel 16 aus seiner Arbeitsstellung herausgehoben ist, sind die Tast- und Stützräder 19 des jeweiligen Rechkreisels 16 vom zu bearbeitenden Untergrund abgehoben. Fig. 2 zeigt in Vorderansicht ein Detail des aus der Arbeitsstellung herausgehobenen vorderen Rechkreisels 16.

Dann, wenn der Rechkreisel 16 der Fig. 2 ausgehend von seiner in Fig. 2 gezeigten Stellung in seine Arbeitsstellung überführt werden soll, wenn derselbe also weiter abgesenkt werden soll, berühren zunächst einige der Rechzinken 18 des Rechkreisels 16, nämlich die in Fig. 2 auf der linken Seite gezeigten Rechzinken 18, zunächst den zu bearbeitenden Untergrund, und zwar bevor eines der Tast-und Stützräder 19 des Rechkreisels 16 auf dem zu bearbeitenden Untergrund zur Anlage kommt. Hierdurch besteht dann nicht nur die Gefahr, dass diese Rechzinken 18 beschädigt werden, weiterhin besteht die Gefahr, dass der zu bearbeitende Untergrund beeinträchtigt wird und das Erntegut, nämlich das zu einem Schwad zu vereinigende Erntegut, durch Erdreich verunreinigt wird.

Eine als Seitenkreiselschwader ausgebildete Heuwerbungsmaschine 10 mit dem in Fig. 1 und 2 gezeigten Aufbau ist aus der DE 20 2007 001 281 U1 bekannt.

DE 200 11 449 U1 offenbart einen Kreiselschwader mit mindestens zwei von der Zapfwelle eines Traktors um aufrechte Kreiselachsen umlaufend angetriebene Rechkreisel, die über Tast- und Stützräder eines Fahrwerks unterhalb der Rechkreisel gegenüber dem Boden abgestützt sind, und die mit Rechzinken bestückten Rechkreisel mittels Auslegerarmen um Klappachsen hochklappbar an einem Maschinenrahmen des Kreiselschwaders angelenkt sind, wobei mindestens ein in einer Schwinge gelagertes vorderes Tast- und Stützrad, verschwenkbar um eine dem Tast-und Stützrad vorgelagerte Horizontalachse innerhalb eines Schwenkwinkels α und mittels eines Stossdämpfers gegenüber einem Fahrwerksrahmen abgestützt ist.

Es besteht Bedarf an einer Heuwerbungsmaschine, bei welcher die Rechzinken bei der Überführung des jeweiligen Rechkreisels hinein in die Arbeitsstellung einer geringeren Beschädigungsgefahr ausgesetzt sind, und bei welcher die Gefahr einer Verunreinigung des Ernteguts verringert ist.

Hiervon ausgehend liegt der vorliegenden Erfindung die Aufgabe zugrunde, eine neuartige Heuwerbungsmaschine zu schaffen.

Diese Aufgabe wird durch eine Heuwerbungsmaschine nach Anspruch 1 gelöst.

Bei der erfindungsgemäßen Heuwerbungsmaschine ist die Beschädigungsgefahr von Rechzinken bei der Überführung des jeweiligen Rechkreisels hinein in die Arbeitsstellung reduziert. Ferner besteht keine Gefahr, dass das Erntegut durch Erdreich verunreinigt wird.

Vorzugsweise ist vorgesehen, dass beim Anheben des oder jedes Rechkreisels wenigstens eines der Tast- und Stützräder des jeweiligen Rechkreisels etwa gleichzeitig oder nach demjenigen Rechzinken oder denjenigen Rechzinken, der oder die von den Rechzinken des jeweiligen Rechkreisels zuletzt vom zu bearbeitenden Untergrund abhebt bzw. abheben, vom zu bearbeitenden Untergrund abhebt.

Durch das gleichzeitige oder spätere Abheben wenigstens eines Tast- und Stützrades wird vorteilhaft vermieden, dass ein Rechzinken beim Anheben des Rechkreisels in den Untergrund einsticht, falls der Rechkreisel sich um die Achsen, die für die Bodenanpassung vorgesehen sind, verdreht.

Nach einer Weiterbildung der Erfindung ist zumindest dasjenige Tast- und Stützrad des jeweiligen Rechkreisels, welches bei der Überführung des jeweiligen Rechkreisels hinein in die Arbeitsstellung zuerst auf dem zu bearbeitenden Untergrund zur Anlage kommt, derart an dem Träger des jeweiligen Rechkreisels für die Tast- und Stützräder gelagert, dass bei einer Überführung des jeweiligen Rechkreisels hinein in die Arbeitsstellung dieses Tast- und Stützrad vor oder spätestens gleichzeitig mit demjenigen Rechzinken, der zuerst auf dem zu bearbeitenden Untergrund zur Anlage kommt, auf dem zu bearbeitenden Untergrund zur Anlage kommt. Diese Ausführung ist zur Reduzierung der Beschädigungsgefahr von Rechzinken sowie zur Reduzierung der Verunreinigungsgefahr des Ernteguts besonders vorteilhaft. Ebenso wird damit vorteilhaft ein Aufreißen der Grasnarbe durch den Rechzinken verhindert.

Gemäß der Erfindung ist das jeweilige Tast- und Stützrad über einen Radträger derart an dem Träger des jeweiligen Rechkreisels für die Tast- und Stützräder gelagert, dass ein erster Abschnitt des Radträgers an einem ersten Ende fest an dem Träger des Rechkreisels für die Tast- und Stützräder befestigt ist, dass ein zweiter Abschnitt des Radträgers an einem ersten Ende das jeweilige Tast- und Stützrad aufnimmt, und dass sich gegenüberliegende zweite Enden der beiden Abschnitte des Radträgers gelenkig oder schwenkbar aneinander angreifen. Die sich gegenüberliegenden zweiten Enden der beiden Abschnitte des Radträgers sind über eine zwei Endstellungen definierende Kulissenführung drehbar oder schwenkbar gekoppelt. Diese Ausführung der Heuwerbungsmaschine ist konstruktiv einfach und erlaubt einen effektiven Schutz der Rechzinken vor einer Beschädigung und eine effektive Reduzierung der Verunreinigungsgefahr des Ernteguts durch Erdreich.

Nach einer Weiterbildung der Erfindung greift an dem ersten Abschnitt des Radträgers und an dem zweiten Abschnitt des Radträgers ein Federelement mit sich gegenüberliegenden Enden an. Das Federelement verlagert den zweiten Abschnitt des Radträgers und damit das jeweilige Tast- und Stützrad vor dem Aufsetzen des jeweiligen Tast- und Stützrads auf dem zu bearbeitenden Untergrund in eine erste Endstellung in Richtung auf den zu bearbeitenden Untergrund. Auch diese Merkmale sind für einen effektiven Schutz der Rechzinken sowie für einen effektiven Schutz des Ernteguts vor einer Verunreinigung bevorzugt.

Vorzugsweise ist die Federkraft des Federelements derart bemessen, dass in der Arbeitsstellung die Gewichtskraft des Rechkreisels den zweiten Abschnitt des Radträgers und damit das jeweilige Tast- und Stützrad entgegen der Federkraft des Federelements in eine zweite Endstellung verlagert. So kann ein gutes Ergebnis der Bodenbearbeitung gewährleistet werden. Es besteht keine Gefahr eines zu großen Abstands der Rechzinken vom Untergrund in der Arbeitsstellung des jeweiligen Rechkreisels.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Seitenansicht einer aus dem Stand der Technik bekannten, als Kreiselschwader ausgebildeten Heuwerbungsmaschine mit einem aus der Arbeitsstellung herausgehobenen Rechkreisel;
- Fig. 2: ein Detail der Fig. 1 in Vorderansicht;
- Fig. 3: eine Seitenansicht einer erfindungsgemäßen, als Kreiselschwader ausgebildeten Heuwerbungsmaschine mit einem aus der Arbeitsstellung herausgehobenen Rechkreisel;
- Fig. 4: ein Detail der Fig. 3 in Vorderansicht;
- Fig. 5: ein Detail der Fig. 3, 4 in einem ersten Zustand; und
- Fig. 6: das Detail der Fig. 5 in einem zweiten Zustand.

Die hier vorliegende Erfindung betrifft eine Heuwerbungsmaschine. Besonders bevorzugt kommt die Erfindung bei einer als Seitenkreiselschwader ausgebildeten Heuwerbungsmaschine zum Einsatz. Die Erfindung ist jedoch nicht auf den Einsatz bei Seitenkreiselschwadern begrenzt. Vielmehr kann die Erfindung auch bei anderen Heuwerbungsmaschinen zum Einsatz kommen, die Rechkreisel mit Zinkenarmen und Rechzinken nutzen, so zum Beispiel bei Mittenschwadern oder Heuwendern.

Besonders vorteilhaft kommt die Erfindung bei Schwadkreiseln zur Anwendung, die große Schwenkbereiche für die Bodenanpassung aufweisen. Da diese sich in angehobenem Zustand gegenüber dem Untergrund neigen bzw. schräg stellen können, besteht das Risiko des Einstechens eines Rechzinkens in den Untergrund sowohl beim Ausheben als auch beim Absenken.

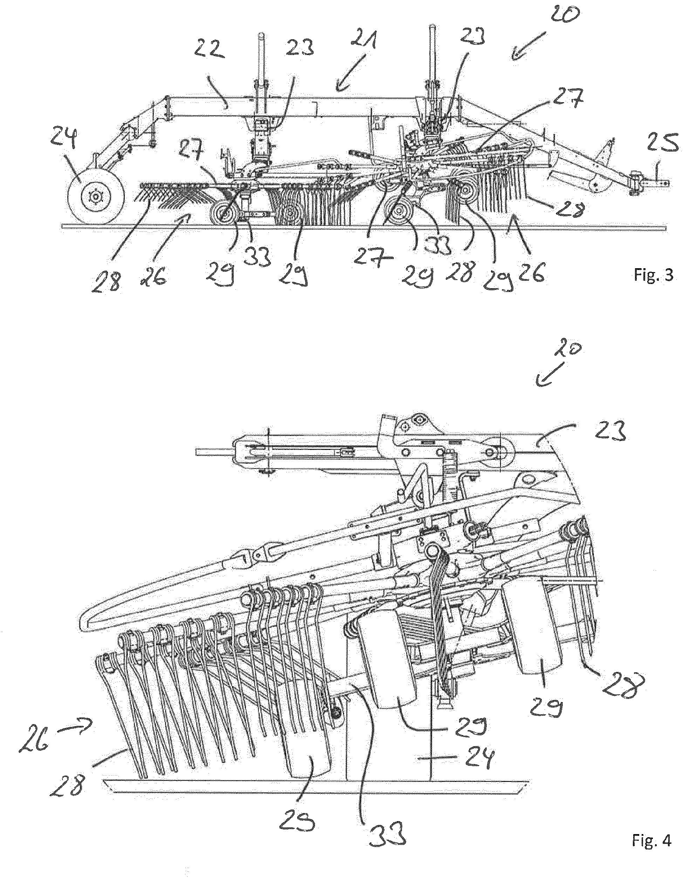

Fig. 3 und 4 zeigen den Aufbau einer als Seitenkreiselschwader ausgebildeten Heuwerbungsmaschine 20. Die Heuwerbungsmaschine 20 verfügt über ein Grundgestell 21 mit einem Längsholm 22 und mit Auslegerarmen 23. Der Längsholm 22 erstreckt sich in Zugrichtung der Heuwerbungsmaschine 20, die Auslegerarme 23 erstrecken sich senkrecht hierzu. Die Heuwerbungsmaschine 20, nämlich das Grundgestell 21 derselben, ist über Stützräder 24 auf einem zu bearbeitenden Untergrund abstützbar und über eine Zugdeichsel 25 an ein Zugfahrzeug ankoppelbar. Die Heuwerbungsmaschine 20 der Fig. 3 und 4 verfügt im gezeigten Ausführungsbeispiel über zwei Rechkreisel 26, die jeweils um eine Kreiselachse umlaufend antreibbar sind, und die Zinkenarme 27 mit Rechzinken 28 aufweisen. Jeder der Rechkreisel 26 ist an jeweils einem der Auslegerarme 23 gelagert. Die Anzahl der in Fig. 3 und 4 gezeigten Rechkreisel 26 und Auslegerarme 23 ist exemplarischer Natur. Es kann auch lediglich ein einziger Rechkreisel 26 oder mehr als zwei Rechkreisel 26 vorhanden sein.

Jeder der Rechkreisel 26 ist am Grundgestell 21, nämlich am jeweiligen Auslegerarm 23, derart gelagert, dass der jeweilige Rechkreisel 26 zwischen einer Arbeitsstellung und einer Transportstellung sowie zwischen einer Arbeitsstellung und einer Vorgewendestellung verlagerbar ist. In der Arbeitsstellung ist der jeweilige Rechkreisel 26 über Tast- und Stützräder 29 auf dem zu bearbeitenden Untergrund abstützbar. In Fig. 3 ist der in Fortbewegungsrichtung der Heuwerbungsmaschine 20 gesehen hintere Rechkreisel 26 in die Arbeitsposition abgesenkt, in welcher die Stützräder 29 des Rechkreisels 26 allesamt auf dem Untergrund aufstehen. Der in Fahrtrichtung der Heuwerbungsmaschine 20 gesehen vordere Rechkreisel 26 ist in Fig. 3 aus seiner Arbeitsstellung herausgehoben, wobei die Tast- und Stützräder 29 dabei vom zu bearbeitenden Untergrund abgehoben sind. Fig. 4 zeigt ein Detail des aus der Arbeitsstellung herausgehobenen, vorderen Rechkreisels 26, wobei der Rechkreisel 26 in der in Fig. 4 gezeigten Position aufgrund von auf denselben wirkenden Kräften eine derart gekippte Relativposition einnimmt, dass bezogen auf den Längsholm 22 äußere Rechzinken 28 und äußere Tast- und Stützräder 29 einen geringeren Abstand vom zu bearbeitenden Untergrund aufweisen als solche Rechzinken 28 und Tast- und Stützräder 29, die einen geringeren Abstand vom Längsholm 22 des Grundgestells 21 aufweisen.

An den oder jedem Rechkreisel 26 der erfindungsgemäßen Heuwerbungsmaschine 20 ist jeweils mindestens ein Tast- und Stützrad 29 desselben derart an einem Träger 33 des jeweiligen Rechkreisels 26 für die Tast- und Stützräder 29 desselben gelagert, dass bei einer Überführung des jeweiligen Rechkreisels 26 hinein in die Arbeitsstellung zumindest eines der Tast- und Stützräder 29 des jeweiligen Rechkreisels 26 vor oder spätestens in etwa gleichzeitig mit demjenigen Rechzinken 28 oder denjenigen Rechzinken 28 des Rechkreisels 26, der oder die von den Rechzinken desselben zuerst auf dem zu bearbeitenden Untergrund zur Anlage kommen, auf dem zu bearbeitenden Untergrund zur Anlage kommt. Dies kann am besten Fig. 4 entnommen werden.

Einem Vergleich der Fig. 4 mit der Fig. 2 kann dabei unmittelbar entnommen werden, dass bei der erfindungsgemäßen Heuwerbungsmaschine 20 das Tast- und Stützrad 29 des Rechkreisels 26, welches bei dem Absenken des Rechkreisels 26 in die Arbeitsstellung zuerst auf dem zu bearbeitenden Untergrund zur Anlage kommt, deutlich abgesenkt ist, und zwar derart, dass dasjenige Tast- und Stützrad 29 des Rechkreisels 26, welches bei der Überführung des Rechkreisels 26 in die Arbeitsstellung zuerst den zu bearbeitenden Untergrund berührt, vor oder spätestens gleichzeitig mit demjenigen Rechzinken 28 auf dem zu bearbeitenden Untergrund zur Anlage kommt, der von den Rechzinken 28 zuerst den zu bearbeitenden Untergrund berührt.

Es besteht dann keine Gefahr, dass Rechzinken 28 sich in den zu bearbeitenden Untergrund einbohren und beschädigt werden. Ferner besteht keine Gefahr, dass Erdreich gelöst wird und in das Erntegut gelangt, sodass keine Verunreinigungsgefahr für das Erntegut besteht. Weiterhin wird auch vorteilhaft vermieden, dass die Grasnarbe aufgerissen und beschädigt wird.

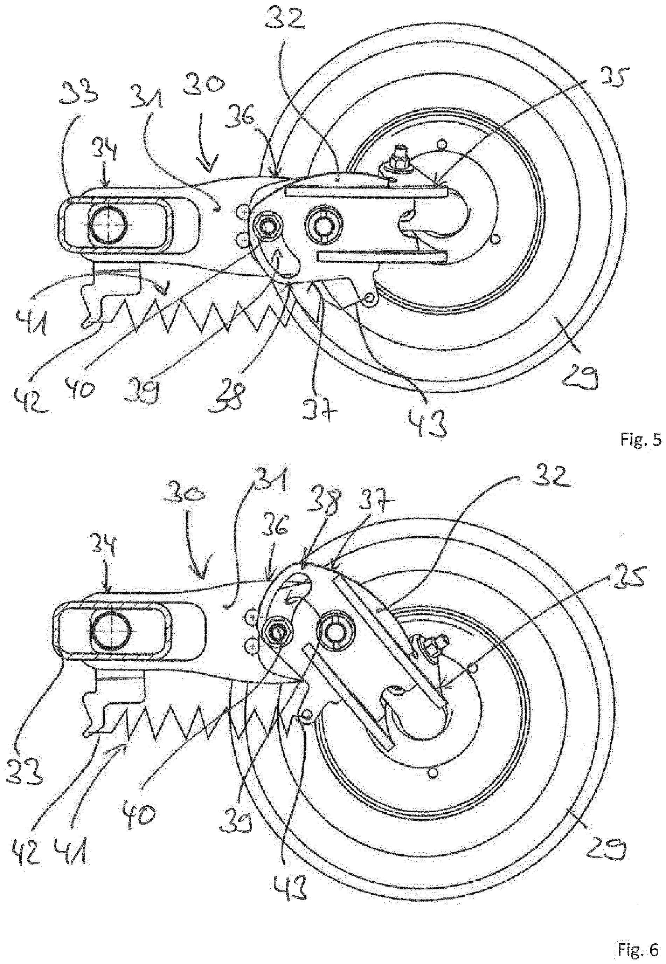

Fig. 5 und 6 zeigen Details der Lagerung eines Tast- und Stützrads 29 eines Rechkreisels 26 an dem Träger 33 des jeweiligen Rechkreisels 26 für die Tast-und Stützräder 29.

Gemäß Fig. 5 und 6 ist das jeweilige Tast- und Stützrad 29 über einen Radträger 30 an dem Träger 33 angebunden, wobei der Radträger 30 einen ersten Abschnitt 31 und einen zweiten Abschnitt 32 aufweist.

Der erste Abschnitt 31 des Radträgers 30 ist mit einem ersten Ende 34 fest an dem Träger 33 angebunden. An einem ersten Ende 35 des zweiten Abschnitts 32 des Radträgers 30 ist das Tast- und Stützrad 29 drehbar gelagert. Die zweiten Enden 36 und 37 der beiden Abschnitte 30 und 32 des Radträgers 30, die einander zugewandt sind, sind gelenkig oder schwenkbar miteinander verbunden. Die sich gegenüberliegenden zweiten Enden 36, 37 der Abschnitte 31, 32 des jeweiligen Radträgers 30 greifen demnach gelenkig oder schwenkbar aneinander an.

Die sich gegenüberliegenden zweiten Enden 36, 37 der beiden Abschnitte 31, 32 des Radträgers 30 sind über eine zwei Endstellungen definierende Kulissenführung 38 drehbar oder schwenkbar miteinander gekoppelt. Einer der beiden Abschnitte des Radträgers 30, nämlich im gezeigten Ausführungsbeispiel der zweite Abschnitt 32, stellt eine Führungsnut 39 der Kulissenführung 38 bereit. Der andere Abschnitt des Radträgers 30, nämlich in Fig. 5, 6 der erste Abschnitt 31 desselben, trägt einen Führungsstift 40, der in die Führungsnut 39 hineinragt. Fig. 5 zeigt die beiden Abschnitte 31, 32 des Radträgers 30 in einer ersten Endstellung. Fig. 6 zeigt dieselben in einer zweiten Endstellung.

Gemäß Fig. 5 und 6 ist ein Federelement 41 vorhanden, das mit einem Ende 43 am zweiten Abschnitt 42 des Radträgers 30 angreift, und das mit einem gegenüberliegenden Ende 42 entweder am ersten Abschnitt 31 des Radträgers 30 oder an einem Abschnitt des Trägers 33 des jeweiligen Rechkreisels 26 angreift. Bei diesem Federelement 41 handelt es sich um eine Zugfeder, deren Federkraft dazu tendiert, das jeweilige Tast- und Stützrad 29 in die in Fig. 6 gezeigte Position zu ziehen, also in eine Position, in welcher das jeweilige Tast- und Stützrad 29 in Richtung auf den zu bearbeitenden Untergrund abgesenkt ist.

Dann, wenn das jeweilige Tast- und Stützrad 29 auf dem zu bearbeitenden Untergrund zur Anlage kommt und die Gewichtskraft des Rechkreisels 26 zumindest teilweise aufnehmen muss, wird das jeweilige Tast- und Stützrad 29 entgegen der Federkraft des Federelements 41 aus der in Fig. 6 gezeigten Position hinein in die in Fig. 5 gezeigte Position gedrückt bzw. bewegt, und zwar so weit, bis der Führungsstift 40 an dem entsprechenden Ende der Führungsnut 39 der Kulissenführung 38 zur Anlage kommt.

Die Federkraft des Federelements 41 ist dabei derart ausgelegt, dass in der Arbeitsstellung die Gewichtskraft des jeweiligen Rechkreisels 29 den zweiten Abschnitt 32 des Radträgers 30 und damit das jeweilige Tast- und Stützrad 29 entgegen der Federkraft des Federelements 21 in seine in Fig. 5 gezeigte zweite Endstellung verlagert. Es besteht keine Gefahr, dass Rechzinken 28 einen unzulässig großen Abstand vom zu bearbeitenden Untergrund aufweisen, dass stets ein gutes Bodenbearbeitungsergebnis gewährleistet werden kann.

Das Federelement 41 kann alternativ als Druckfeder, Gummifeder, Gasfeder, Drehfeder oder ähnliches ausgeführt werden.

Wenn im Zusammenhang mit der Erfindung davon gesprochen wird, dass ein Tast- und Stützrad und ein Rechzinken in etwa gleichzeitig auf dem zu bearbeitenden Untergrund zur Anlage kommen, dann ist darunter zu verstehen, dass der Rechzinken soweit in den Untergrund eindringen kann, wie er noch keine wesentlichen Beschädigungen bzw. Verunreinigungen verursacht. In der Regel führt eine Eindringtiefe von etwa 5 Zentimetern noch nicht zu wesentlichen Beschädigungen oder Verunreinigungen.

### Bezugszeichenliste

- 10: Heuwerbungsmaschine
- 11: Grundgestell
- 12: Längsholm
- 13: Auslegerarm
- 14: Stützrad
- 15: Zugdeichsel
- 16: Rechkreisel
- 17: Zinkenarm
- 18: Rechzinken
- 19: Tast- und Stützrad
- 20: Heuwerbungsmaschine
- 21: Grundgestell
- 22: Längsholm
- 23: Auslegerarm
- 24: Stützrad
- 25: Zugdeichsel
- 26: Rechkreisel
- 27: Zinkenarm
- 28: Rechzinken
- 29: Tast- und Stützrad
- 30: Radträger
- 31: Abschnitt
- 32: Abschnitt
- 33: Träger
- 34: Ende
- 35: Ende
- 36: Ende
- 37: Ende
- 38: Kulissenführung
- 39: Führungsnut
- 40: Führungsstift
- 41: Federelement
- 42: Ende
- 43: Ende

## Patentansprüche

1. Heuwerbungsmaschine (20), insbesondere Kreiselschwader,
mit einem Grundgestell (21), das über Stützräder (24) auf einem zu bearbeitenden Untergrund abstützbar ist und über das die Heuwerbungsmaschine an ein Zugfahrzeug ankoppelbar ist,
mit mindestens einem um eine Kreiselachse umlaufend angetriebenen Rechkreisel (26), welcher Zinkenarme (27) mit Rechzinken (28) aufweist,
wobei der oder jeder Rechkreisel (26) am Grundgestell (21) derart gelagert ist, dass der jeweilige Rechkreisel (26) zwischen einer Arbeitsstellung und einer Transportstellung sowie zwischen einer Arbeitsstellung und einer Vorgewendestellung verlagerbar ist,
wobei der oder jeder Rechkreisel (26) in der Arbeitsstellung über Tast- und Stützräder (29) auf dem zu bearbeitenden Untergrund abstützbar ist, und
das jeweilige Tast- und Stützrad (29) über einen Radträger (30) derart an einem oder dem Träger (33) des jeweiligen Rechkreisels (26) für die Tast- und Stützräder (29) desselben gelagert ist, dass ein erster Abschnitt (31) des Radträgers (30) an einem ersten Ende (34) fest an dem Träger (33) des Rechkreisels (36) befestigt ist, dass ein zweiter Abschnitt (32) des Radträgers (30) an einem ersten Ende (35) das jeweilige Tast- und Stützrad (29) aufnimmt, und dass sich gegenüberliegende zweite Enden (36, 37) der beiden Abschnitte (31, 32) des Radträgers (30) gelenkig oder schwenkbar aneinander angreifen, **dadurch gekennzeichnet, dass** die sich gegenüberliegenden zweiten Enden (36, 37) der beiden Abschnitte (31, 32) des Radträgers (30) über eine zwei Endstellungen definierende Kulissenführung (38) drehbar oder schwenkbar gekoppelt sind.

2. Heuwerbungsmaschine nach Anspruch 1, **dadurch gekennzeichnet, dass** zumindest dasjenige Tast- und Stützrad (29) des jeweiligen Rechkreisels (26), welches bei der Überführung des jeweiligen Rechkreisels hinein in die Arbeitsstellung zuerst auf dem zu bearbeitenden Untergrund zur Anlage kommt, derart an einem Träger (33) des jeweiligen Rechkreisels (26) für die Tast- und Stützräder (29) desselben gelagert ist, dass bei einer Überführung des jeweiligen Rechkreisels hinein in die Arbeitsstellung dieses Tast- und Stützrad (29) vor oder spätestens etwa gleichzeitig mit demjenigen Rechzinken, der zuerst auf dem zu bearbeitenden Untergrund zur Anlage kommt, auf dem zu bearbeitenden Untergrund zur Anlage kommt.

3. Heuwerbungsmaschine nach Anspruch 1, **dadurch gekennzeichnet, dass** einer der beiden Abschnitte (31, 32) des Radträgers (30) eine Führungsnut (39) und der andere der beiden Abschnitte (32, 33) des Radträgers (30) einen in die Führungsnut (39) eingreifenden Führungsstift (40) aufweist.

4. Heuwerbungsmaschine nach einem der Ansprüche 1 oder 3, **dadurch gekennzeichnet, dass** ein Federelement (41) mit seinen Enden (42, 43) an dem ersten Abschnitt (31) des Radträgers (30) oder an einem Abschnitt des Trägers (33) und an dem zweiten Abschnitt (32) des Radträgers (30) angreift.

5. Heuwerbungsmaschine nach Anspruch 4, **dadurch gekennzeichnet, dass** das Federelement (44) eine Zugfeder, eine Druckfeder, eine Gummifeder, eine Gasfeder oder eine Drehfeder ist.

6. Heuwerbungsmaschine nach Anspruch 4 oder 5, **dadurch gekennzeichnet, dass** das Federelement (41) den zweiten Abschnitt (32) des Radträgers (30) und damit das jeweilige an demselben drehbar gelagerte Tast- und Stützrad (29) vor dem Aufsetzen des jeweiligen Tast- und Stützrads (29) auf dem zu bearbeitenden Untergrund in eine erste Endstellung in Richtung auf den zu bearbeitenden Untergrund verlagert.

7. Heuwerbungsmaschine nach einem der Ansprüche 4 bis 6, **dadurch gekennzeichnet, dass** die Federkraft des Federelements (41) derart bemessen ist, dass in der Arbeitsstellung des jeweiligen Rechkreisels (26) die Gewichtskraft des jeweiligen Rechkreisels (26) den zweiten Abschnitt (32) des Radträgers (30) und damit das jeweilige Tast- und Stützrad (29) entgegen der Federkraft des Federelements (41) in eine zweite Endstellung verlagert.

8. Heuwerbungsmaschine nach einem der vorangehenden Ansprüche, **dadurch gekennzeichnet, dass** beim Anheben des oder jedes Rechkreisels (26) wenigstens eines der Tast- und Stützräder (29) des jeweiligen Rechkreisels (26) etwa gleichzeitig oder nach demjenigen Rechzinken (28) oder denjenigen Rechzinken (28), der oder die von den Rechzinken (28) des jeweiligen Rechkreisels (26) zuletzt vom zu bearbeitenden Untergrund abhebt bzw. abheben, vom zu bearbeitenden Untergrund abhebt.

## Claims

1. A hay making machine (20), in particular a rotary swather, comprising
a base frame (21) which can be supported by way of support wheels (24) on a ground to be worked and by way of which the hay making machine can be coupled to a towing vehicle,
at least one rake rotor (26) which is driven in rotation about a rotor axis and which has tine arms (27) with rake tines (28),
wherein the or each rake rotor (26) is mounted to the base frame (21) in such a way that the respective rake rotor (26) is displaceable between a working position and a transport position and between a working position and a headland position,
wherein the or each rake rotor (26) can be supported in the working position by way of feeler and support wheels (30) on the ground to be worked, and
the respective feeler and support wheel (29) is mounted by way of a wheel carrier (30) to a or the carrier (33) of the respective rake rotor (26) for the feeler and support wheels (29) thereof in such a way that a first portion (31) of the wheel carrier (30) is fixed at a first end (34) fixedly to the carrier (33) of the rake rotor (26), that a second portion (32) of the wheel carrier (30) receives the respective feeler and support wheel (29) at a first end (35) and that oppositely disposed second ends (36, 37) of the two portions (31, 32) of the wheel carrier (30) hingedly or pivotably engage each other, **characterised in that** the oppositely disposed second ends (36, 37) of the two portions (31, 32) of the wheel carrier (30) are rotatably or pivotably coupled by way of a sliding guide (38) defining two end positions.

2. A hay making machine according to claim 1 **characterised in that** at least that feeler and support wheel (29) of the respective rake rotor (26), that first comes into contact with the ground to be worked in the transition of the respective rake rotor into the working position is mounted to a carrier (33) of the respective rake rotor (26) for the feeler and support wheels (29) thereof in such a way that upon a transfer of the respective rake rotor into the working position of said feeler and support wheel (29) comes into contact with the ground to be worked prior to or at least approximately simultaneously with that rake tine which first comes into contact with the ground to be worked.

3. A hay making machine according to claim 1 **characterised in that** one of the two portions (31, 32) of the wheel carrier (30) has a guide groove (39) and the other of the two portions (32, 33) of the wheel carrier (30) has a guide pin (40) engaging into the guide groove (39).

4. A hay making machine according to one of claims 1 or 3 **characterised in that** a spring element (41) engages with its ends (42, 43) the first portion (31) of the wheel carrier (30) or a portion of the carrier (33) and the second portion (32) of the wheel carrier (30).

5. A hay making machine according to claim 4 **characterised in that** the spring element (44) is a tension spring, a compression spring, a rubber spring, a gas spring or a torsion spring.

6. A hay making machine according to claim 4 or claim 5 **characterised in that** the spring element (41) displaces the second portion (32) of the wheel carrier (30) and therewith the respective feeler and support wheel (29) mounted rotatably thereto into a first end position in a direction towards the ground to be worked prior to the respective feeler and support wheel (29) being set on the ground to be worked.

7. A hay making machine according to one of claims 4 to 6 **characterised in that** the spring force of the spring element (41) is of such a strength that in the working position of the respective rake rotor (26) the force caused by the weight of the respective rake rotor (26) displaces the second portion (32) of the wheel carrier (30) and therewith the respective feeler and support wheel (29) into a second end position against the spring force of the spring element (41).

8. A hay making machine according to one of the preceding claims **characterised in that** when the or each rake rotor (26) is lifted at least one of the feeler and support wheels (29) of the respective rake rotor (26) lifts off the ground to be worked approximately simultaneously with or after that rake tine (28) or those rake tines (28) which of the rake tines (28) of the respective rake rotor (26) lifts or lift last off the ground to be worked.

## Revendications

1. Machine de fenaison (20), en particulier andaineur rotatif, comprenant un bâti (21) qui peut prendre appui sur un sol à travailler par l'intermédiaire de roues d'appui (24) et par l'intermédiaire duquel la machine de fenaison peut être attelée à un véhicule de traction, comprenant au moins un rotor de râtelage (26) qui est entraîné en rotation autour d'un axe de rotor et qui comporte des bras porte-dents (27) avec des dents de râtelage (28), le ou chaque rotor de râtelage (26) étant monté sur le bâti (21) de façon que le rotor de râtelage respectif (26) soit déplaçable entre une position de travail et une position de transport ainsi qu'entre une position de travail et une position en tournière, le ou chaque rotor de râtelage (26) pouvant, dans la position de travail, prendre appui sur le sol à travailler par l'intermédiaire de roues de palpage et d'appui (29), et la roue de palpage et d'appui respective (29) étant montée par l'intermédiaire d'un porte-roue (30) sur un ou le support (33) du rotor de râtelage respectif (26) pour les roues de palpage et d'appui (29) de celui-ci, de façon qu'une première portion (31) du porte-roue (30) soit solidarisée par une première extrémité (34) au support (33) du rotor de râtelage (36), qu'une seconde extrémité (32) du porte-roue (30) reçoive à une première extrémité (35) la roue de palpage et d'appui respective (29), et que des secondes extrémités en vis-à-vis (36, 37) des deux portions (31, 32) du porte-roue (30) coopèrent de façon articulée ou pivotante, **caractérisée en ce que** les secondes extrémités en vis-à-vis (36, 37) des deux portions (31, 32) du porte-roue (30) sont couplées de manière tournante ou pivotante par l'intermédiaire d'un guide à coulisse (38) définissant deux positions extrêmes.

2. Machine de fenaison selon la revendication 1, **caractérisée en ce qu'**au moins la roue de palpage et d'appui (29) du rotor de râtelage respectif (26), laquelle vient en contact en premier avec le sol à travailler lors du transfert du rotor de râtelage respectif dans la position de travail, est montée sur un support (33) du rotor de râtelage respectif (26) pour les roues de palpage et d'appui (29) de celui-ci, de façon que, lors d'un transfert du rotor de râtelage respectif dans la position de travail, cette roue de palpage et d'appui (29) vienne en contact avec le sol à travailler avant ou au plus tard à peu près simultanément avec la dent de râtelage qui vient en contact en premier avec le sol à travailler.

3. Machine de fenaison selon la revendication 1, **caractérisée en ce que** l'une des deux portions (31, 32) du porte-roue (30) comporte une rainure de guidage (39) et l'autre des deux portions (32, 33) du porte-roue (30) comporte une tige de guidage (40) qui pénètre dans la rainure de guidage (39).

4. Machine de fenaison selon une des revendications 1 ou 3, **caractérisée en ce qu'**un élément élastique (41) agit par ses extrémités (42, 43) sur la première portion (31) du porte-roue (30) ou sur une portion du support (33) et sur la seconde extrémité (32) du porte-roue (30).

5. Machine de fenaison selon la revendication 4, **caractérisée en ce que** l'élément élastique (44) est un ressort de traction, un ressort de compression, un ressort en caoutchouc, un ressort à gaz ou un ressort de torsion.

6. Machine de fenaison selon la revendication 4 ou 5, **caractérisée en ce que** l'élément élastique (41) déplace la seconde extrémité (32) du porte-roue (30), et donc la roue de palpage et d'appui respective (29) montée tournante sur celui-ci, avant l'appui de la roue de palpage et d'appui respective (29) sur le sol à travailler, vers une première position extrême en direction du sol à travailler.

7. Machine de fenaison selon une des revendications 4 à 6, **caractérisée en ce que** la force élastique de l'élément élastique (41) est calculée de façon que, dans la position de travail du rotor de râtelage respectif (26), le poids du rotor de râtelage respectif (26) déplace la seconde extrémité (32) du porte-roue (30) et donc la roue de palpage et d'appui respective (29) à l'encontre de la force élastique de l'élément élastique (41) vers une seconde position extrême.

8. Machine de fenaison selon une des revendications précédentes, **caractérisée en ce que** lors du levage du ou de chaque rotor de râtelage (26), au moins une des roues de palpage et d'appui (29) du rotor de râtelage respectif (26) décolle du sol à travailler à peu près simultanément à ou après la dent de râtelage (28) ou des dents de râtelage (28) qui, parmi les dents de râtelage (28) du rotor de râtelage respectif (26), décolle, respectivement décollent en dernier du sol à travailler.
